# EUROPEAN PATENT APPLICATION

(11) **EP 3 200 524 A1**
(43) Date of publication of application: **02.08.2017**
(21) Application number: 14902500.9
(22) Date of filing: 25.09.2014
(51) Int. Cl.: H04W 72/04

(54) **SUB-FRAME SCHEDULING METHOD, DATA RECEIVING AND TRANSMISSION METHOD, DEVICE AND SYSTEM IN HALF-DUPLEX SYSTEM**

(71) Applicant: Fujitsu Limited, Kawasaki-shi, Kanagawa 211-8588 (JP)
(72) Inventor: WANG, Weiwei, Beijing 100025 (CN); WANG, Xin, Beijing 100025 (CN)
(74) Representative: Fenlon, Christine Lesley
(86) International application number: PCT/CN2014/087431
(87) International publication number: WO 2016/045053

(57) **Abstract**

Embodiments of this disclosure provide a subframe scheduling method and apparatus in a half-duplex system and a system. The method includes: a network side transmits uplink and downlink subframe change information to UE, the uplink and downlink subframe change information indicating the UE to change uplink and downlink setting(s) of one subframe or one group of subframes in first uplink and downlink subframe configuration at the network side; and the network side serves for the UE at a corresponding subframe according to the changed uplink and downlink setting. With the method of the embodiments of this disclosure, the system capacity is improved.

## Description

### Field

This disclosure relates to the field of communications, and in particular to a subframe scheduling method in a half-duplex system, a data receiving and transmitting method in a half-duplex system, and apparatus in a half-duplex system and a system.

### Background

An ultra-dense network is regarded as one of key technologies in a 5G (a 5th-generation mobile communication technology) system. In order to improve a system capacity, coordination among base stations (BSs) or transmission points (TPs) serving a macro cell and/or small cells becomes an important research direction.

In a conventional scheme, each base station or transmission point communicates with user equipment (UE) according to designated uplink and downlink subframe configuration. The uplink and downlink subframe configuration is configured by a network (such as a base station) via system information or signaling of a physical layer, and is well known by the UE, and the uplink and downlink subframe configuration will not be changed until new uplink and downlink subframe configuration is received. In other words, for UEs receiving same uplink and downlink subframe configuration, if only part of the UEs are scheduled in one uplink or downlink subframe, the other of the UEs that is not scheduled will not be served at the subframe, such as being served by other base stations of transmission points. Hence, improvement of the system capacity is limited.

It should be noted that the above description of the background is merely provided for clear and complete explanation of this disclosure and for easy understanding by those skilled in the art. And it should not be understood that the above technical solution is known to those skilled in the art as it is described in the background of this disclosure.

### Summary

In a conventional scheme, before new uplink and downlink subframe configuration is received, the UE can only be scheduled according to current uplink and downlink subframe configuration. Such a method may be carried out relatively simply, and the UE may determine a time sequence of related operations (such as a hybrid automatic repeat request (HARQ)) according to received uplink and downlink subframe configuration. However, as an uplink frame can only schedule uplink data and a downlink frame can only schedule downlink data in a case where uplink and downlink subframe configuration is fixed, improvement of the system capacity is limited.

Embodiments of this disclosure provide a subframe scheduling method in a half-duplex system, a data receiving and transmitting method in a half-duplex system, and apparatus in a half-duplex system and a system, so as to improve a system capacity.

According to a first aspect of the embodiments of this disclosure, there is provided a subframe scheduling method in a half-duplex system; wherein, the method includes: transmitting uplink and downlink subframe change information by a network side to UE, the uplink and downlink subframe change information indicating the UE to change uplink and downlink setting(s) of one subframe or one group of subframes in first uplink and downlink subframe configuration at the network side; and serving for the UE by the network side at a corresponding subframe according to the changed uplink and downlink setting.

According to a second aspect of the embodiments of this disclosure, there is provided a subframe scheduling method in a half-duplex system; wherein, the method includes: transmitting uplink and downlink changeable subframe indication information by a network side to UE, the uplink and downlink changeable subframe indication information indicating a subframe or a group of subframes of which uplink and downlink setting(s) can be changed in first uplink and downlink subframe configuration at the network side; and serving for the UE by the network side at a corresponding subframe according to the changed uplink and downlink setting.

According to a third aspect of the embodiments of this disclosure, there is provided a data receiving and transmitting method in a half-duplex system; wherein, the method includes: determining a subframe or a group of subframes of which uplink and downlink setting(s) is/are changed in first uplink and downlink subframe configuration at a network side by UE according to received uplink and downlink subframe change information and/or uplink and downlink changeable subframe indication information; and receiving and transmitting data by the UE according to the subframe or the group of subframes of which the uplink and downlink setting(s) is/are changed.

According to a fourth aspect of the embodiments of this disclosure, there is provided a subframe scheduling apparatus in a half-duplex system, applicable to a network side; wherein, the apparatus includes: a transmitting unit configured to transmit uplink and downlink subframe change information to UE, the uplink and downlink subframe change information indicating the UE to change uplink and downlink setting(s) of one subframe or one group of subframes in first uplink and downlink subframe configuration at the network side; and a serving unit configured to serve for the UE at a corresponding subframe according to the changed uplink and downlink setting.

According to a fifth aspect of the embodiments of this disclosure, there is provided a subframe scheduling apparatus in a half-duplex system, applicable to a network side; wherein, the apparatus includes: a transmitting unit configured to transmit uplink and downlink changeable subframe indication information to UE, the uplink and downlink changeable subframe indication information indicating a subframe or a group of subframes of which uplink and downlink setting(s) can be changed in first uplink and downlink subframe configuration at the network side; and a serving unit configured to serve for the UE at a corresponding subframe according to the changed uplink and downlink setting.

According to a sixth aspect of the embodiments of this disclosure, there is provided a data receiving and transmitting apparatus in a half-duplex system, applicable to a UE side; wherein, the apparatus includes: a determining unit configured to determine a subframe or a group of subframes of which uplink and downlink setting(s) is/are changed in first uplink and downlink subframe configuration at a network side according to received uplink and downlink subframe change information and/or uplink and downlink changeable subframe indication information; and a processing unit configured to receive and transmit data according to the subframe or the group of subframes of which the uplink and downlink setting(s) is/are changed.

According to a seventh aspect of the embodiments of this disclosure, there is provided a transmission point; wherein, the transmission point includes the apparatus as described in the fourth or the fifth aspect.

According to an eighth aspect of the embodiments of this disclosure, there is provided UE; wherein, the UE includes the apparatus as described in the sixth aspect.

According to a ninth aspect of the embodiments of this disclosure, there is provided a communication system; wherein, the communication system includes the transmission point as described in the seventh aspect and the UE as described in the eighth aspect.

According to another aspect of the embodiments of this disclosure, there is provided a computer readable program code, which, when executed in a transmission point, will cause a computer to carry out the subframe scheduling method as described in the first or the second aspect in the transmission point.

According to a further aspect of the embodiments of this disclosure, there is provided a computer readable medium, including a computer readable program code, which will cause a computer to carry out the subframe scheduling method as described in the first or the second aspect in a transmission point.

According to still another aspect of the embodiments of this disclosure, there is provided a computer readable program code, which, when executed in UE, will cause a computer to carry out the data receiving and transmitting method as described in the third aspect in the UE.

According to yet another aspect of the embodiments of this disclosure, there is provided a computer readable medium, including a computer readable program code, which will cause a computer to carry out the data receiving and transmitting method as described in the third aspect in UE.

An advantage of the embodiments of this disclosure exists in that with the method of the embodiments of this disclosure, the system capacity in a half-duplex system is improved.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising/includes/including" when used in this specification is taken to specify the presence of stated features, integers, steps or components but does not preclude the presence or addition of one or more other features, integers, steps, components or groups thereof.

### Brief Description of the Drawings

The drawings are included to provide further understanding of this disclosure, which constitute a part of the specification and illustrate the preferred embodiments of this disclosure, and are used for setting forth the principles of this disclosure together with the description. It is obvious that the accompanying drawings in the following description are some embodiments of this disclosure, and for those of ordinary skills in the art, other accompanying drawings may be obtained according to these accompanying drawings without making an inventive effort. In the drawings:
FIGs. 1-3 are schematic diagrams of three application scenarios of an embodiment;
FIG. 4 is a flowchart of a subframe scheduling method of Embodiment 1 of this disclosure;
FIG. 5 is a schematic diagram of an example of changing uplink and downlink setting of a subframe;
FIG. 6 is a schematic diagram of another application scenario of an embodiment;
FIG. 7 is a flowchart of a subframe scheduling method of Embodiment 2 of this disclosure;
FIG. 8 is a flowchart of a data receiving and transmitting method of Embodiment 3 of this disclosure;
FIG. 9 is a schematic diagram of a structure of a subframe scheduling apparatus of Embodiment 4 of this disclosure;
FIG. 10 is a schematic diagram of a structure of a subframe scheduling apparatus of Embodiment 5 of this disclosure;
FIG. 11 is a schematic diagram of a structure of a data receiving and transmitting apparatus of Embodiment 6 of this disclosure;
FIG. 12 is a schematic diagram of a hardware structure of a transmission point of Embodiment 7 of this disclosure;
FIG. 13 is a schematic diagram of a hardware structure of UE of Embodiment 8 of this disclosure; and
FIG. 14 is a schematic diagram of a basic architecture of a communication system of Embodiment 9 of this disclosure.

### Detailed Description

These and further aspects and features of the present disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the spirit and terms of the appended claims. Various implementations of this disclosure shall be described below with reference to the accompanying drawings. These implementations are illustrative only, and are not intended to limit this disclosure.

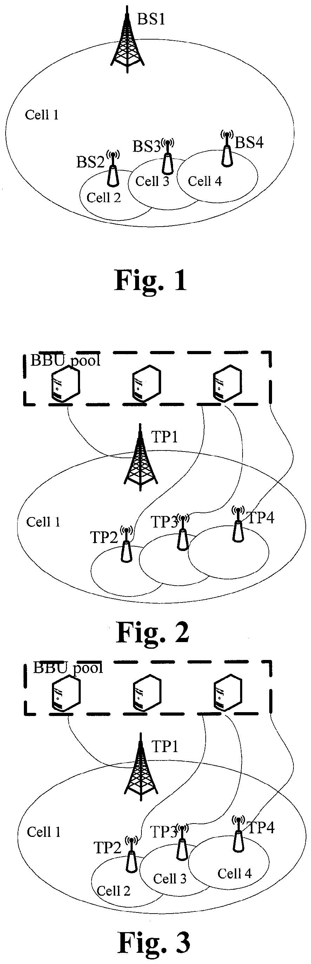

An application scenario of the embodiments of this disclosure is a half-duplex system, that is, at any time, each transmission point can operate as an uplink or a downlink only over one carrier. A scenario taken into account is that a geographic area is covered by multiple transmission points, each transmission point is equipped with one antenna or multiple antennas. As shown in FIG. 1, each transmission point may be a base station and form a physical cell operating in a carrier. Or, as shown in FIGs. 2 and 3, the multiple transmission points are connected to a baseband unit (BBU) pool at the same time and form one physical cell (FIG. 2) or multiple physical cells (FIG. 3) operating in a carrier.

In the above scenarios, each transmission point may operate with same or different uplink and downlink subframe configuration, and each UE is configured with uplink and downlink subframe configuration of a transmission point. Such configuration defines periodic uplink and downlink subframe setting. In an LTE (long-term evolution) system, such a period is 10 subframes, i.e. 10ms, and such setting will not be changed in a certain period, such as 500ms. In the LTE system, the uplink and downlink subframe configuration is time division duplexing(TDD) configuration designated in a system message or downlink control information (DCI). For the sake of convenience of explanation, such configuration is referred to as first uplink and downlink subframe configuration in this embodiment.

### Embodiment 1

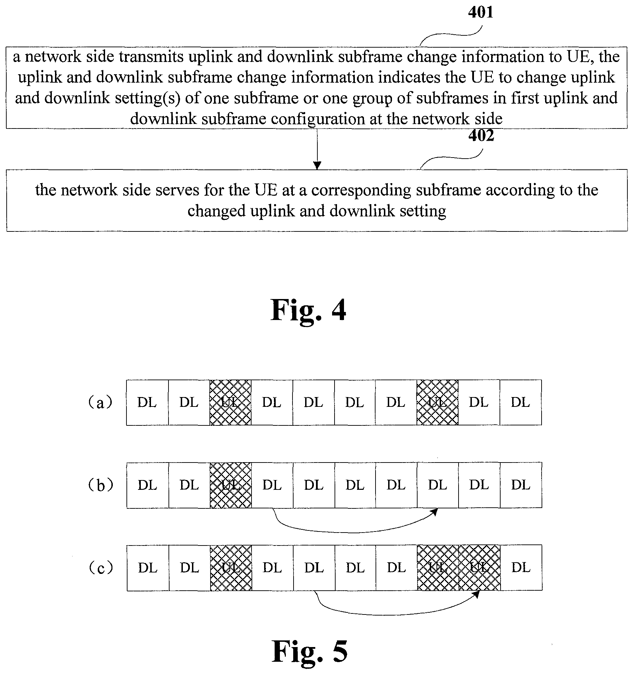

An embodiment of this disclosure provides a subframe scheduling method in a half-duplex system. FIG. 4 is a flowchart of the method. Referring to FIG. 4, the method includes:
step 401: a network side transmits uplink and downlink subframe change information to UE, the uplink and downlink subframe change information indicates the UE to change uplink and downlink setting(s) of one subframe or one group of subframes in first uplink and downlink subframe configuration at the network side; and
step 402: the network side serves for the UE at a corresponding subframe according to the changed uplink and downlink setting.

In step 401, before the network side changes its first uplink and downlink subframe configuration (that is, before the UE receives new uplink and downlink subframe configuration), for one subframe or one group of subframes, the network side transmits uplink and downlink subframe change information to the UE before start of the subframe or the group of subframes, so as to indicate the UE to change uplink and downlink setting(s) of the subframe or the group of subframes in the first uplink and downlink subframe configuration at the network side. For example, if the subframe or the group of subframes is/are uplink subframe(s), it/they is/are changed into downlink subframe(s), that is, data are received in the subframe or the group of subframes. On the contrary, if the subframe or the group of subframes is/are downlink subframe(s), it/they is/are changed into uplink subframe(s), that is, data are transmitted in the subframe or the group of subframes.

In this embodiment, the uplink and downlink subframe change information may be transmitted via a physical control channel, such as a physical downlink control channel (PDCCH), and may also be transmitted via other messages, such as a media access control (MAC) layer control element, etc.

In this embodiment, an entity of the network side may be a base station (BS), and may also be another transmission point (TP) having a control function, and this embodiment is not limited thereto.

In an implementation of this embodiment, the uplink and downlink subframe change information may include location information of a subframe of which uplink and downlink configuration is changed. Hence, the UE may determine the subframe or the group of subframes in the first uplink and downlink subframe configuration at the network side with the uplink and downlink setting(s) being changed, so as to receive or transmit data in the subframe or the group of subframes according to the changed uplink and downlink configuration.

In this embodiment, it is taken into account that a subframe is denoted by a serial number, the location information may be indicated via a subframe serial number. For example, if a serial number 5 is included in the uplink and downlink subframe change information, it shows that uplink and downlink setting of a fifth subframe is changed, or, if a range of serial number (such as 3-6) or a group of serial numbers (such as 3, 4, 5, 6) is/are included in the uplink and downlink subframe change information, it shows that uplink and downlink settings of a third, fourth, fifth and sixth subframes are changed.

In this embodiment, the location information may also be indicated via a bitmap. For example, if a bitmap "0100100110" is included in the uplink and downlink subframe change information, it shows that uplink and downlink settings of a second, fifth, eighth and ninth subframes are changed.

In another implementation of this embodiment, the uplink and downlink subframe change information does not include the above location information, which shows that there exists a fixed time sequence relationship between a subframe of which the uplink and downlink setting is changed and a subframe receiving the uplink and downlink subframe change information. Hence, the UE may determine the subframe or the group of subframes with the uplink and downlink setting(s) being changed in the first uplink and downlink subframe configuration at the network side according to the fixed time sequence relationship, so as to receive or transmit the data in the subframe or the group of subframes according to the changed uplink and downlink configuration.

In this embodiment, for example, if the UE receives the uplink and downlink subframe change information in an *n-th* subframe, it shows that uplink and downlink setting of an *(n*+*m)-th* subframe or uplink and downlink settings of subframes from an *(n+m)-th* subframe to an *(n+m+k)-th* subframe is/are changed. Such a fixed time sequence relationship, e.g. values of the *m* and the *k*, may be predefined or preconfigured. In this embodiment, predefinition refers to that it is predefined in a standard and is known to the network side and the UE, and preconfiguration refers to that it is preconfigured by the network side and notified to the UE.

In an implementation of this embodiment, alternatively, the uplink and downlink subframe change information may further include scheduling information related to a subframe of which the uplink and downlink setting is changed, such as a location of a resource allocated for the UE, a modulation and coding scheme, and a power control parameter, etc. In this way, the UE may directly receive or transmit data according to the scheduling information in the subframe of which the uplink and downlink setting is changed.

FIG. 5 is a schematic diagram of an example of changing uplink and downlink setting of a subframe in first uplink and downlink subframe configuration at the network side. As shown in FIG. 5, (a) is a schematic diagram of the first uplink and downlink subframe configuration at the network side, (b) is a schematic diagram of changing an uplink and downlink direction of an 8th subframe from uplink into downlink, that is, in this example, the 8th subframe is changed from an uplink subframe into a downlink subframe, and (c) is a schematic diagram of changing an uplink and downlink direction of a 9th subframe from downlink into uplink, that is, in this example, the 9th subframe is changed from a downlink subframe into an uplink subframe.

In step 402, the network side may select another transmission point to serve for the UE at a corresponding subframe according to the changed uplink and downlink setting, and may also serve for the UE by itself at a corresponding subframe according to the changed uplink and downlink setting, which shall be described below by way of examples.

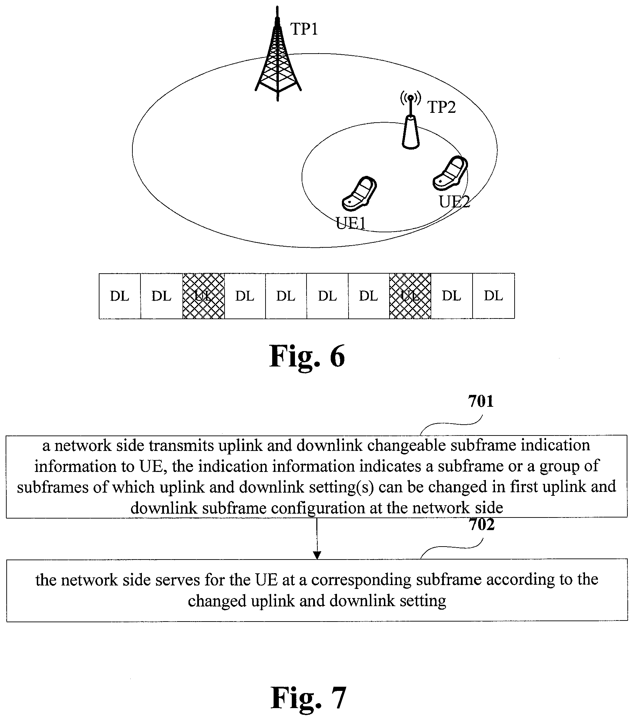

FIG. 6 is a schematic diagram of another application scenario of this embodiment. As shown in FIG. 6, two UEs (UE1 and UE2) are both within coverage ranges of a TP1 and a TP2. TP2 operates according to uplink and downlink subframe configuration shown in FIG. 6. It is assumed that UE2 receives uplink and downlink subframe change information, which indicates that the 8th subframe is changed from an uplink subframe into a downlink subframe, according to the method of this embodiment, there are two processing schemes as below in the network side (TP2).

Scheme 1: the network side (TP2) selects TP1 to serve for downlink of UE2 at the 8th subframe, and at the same time, TP2 serves for uplink of UE1. Hence, a case will occur within a coverage range of TP2 where two different UEs operate at the same time respectively at two different operational modes, uplink and downlink, at the same subframe, thereby achieving full-duplex communication within this small range, and improving the system capacity.

Scheme 2: the network side (TP2) serves for the downlink of UE2 at the 8th subframe, rather than the uplink designated in its uplink and downlink subframe configuration. Hence, TP2 may schedule the downlink of UE2 at the 8th subframe, thereby improving the system capacity.

### Embodiment 2

An embodiment of this disclosure further provides a subframe scheduling method in a half-duplex system. FIG. 7 is a flowchart of the method. Referring to FIG. 7, the method includes:
step 701: a network side transmits uplink and downlink changeable subframe indication information to UE, the indication information indicates a subframe or a group of subframes of which uplink and downlink setting(s) can be changed in first uplink and downlink subframe configuration at the network side; and
step 702: the network side serves for the UE at a corresponding subframe according to the changed uplink and downlink setting.

In step 701, the network side may transmit the uplink and downlink changeable subframe indication information to indicate a subframe or a group of subframes of which uplink and downlink setting(s) can be changed in the first uplink and downlink subframe configuration, such type of subframe(s) may be referred to as uplink and downlink changeable subframe(s).

In this embodiment, the indication information may be transmitted via a system message, an RRC (radio resource control) message, an MAC layer control element, or physical layer signaling (such as downlink control information), etc.

In this embodiment, the indication information may indicate a location of an uplink and downlink changeable subframe by the following manners; however, this embodiment is not limited thereto. In an example, the uplink and downlink changeable subframe may be indicated via a subframe serial number. In another example, the uplink and downlink changeable subframe may be indicated via a bitmap indicating a location of an uplink and downlink changeable subframe, for example, a bitmap "0100100110" indicates that uplink and downlink settings of a second, a 5th, an 8th and a 9th subframes may be changed. In another example, the uplink and downlink changeable subframe may be indicated by configuring an uplink and downlink subframe configuration different from the first uplink and downlink subframe configuration, that is, the uplink and downlink changeable subframe may be indicated via an uplink and downlink subframe configuration different from the first uplink and downlink subframe configuration of the network side, hence, the UE may deem according to the difference that those subframes of different uplink and downlink settings in the two types of configuration are uplink and downlink changeable subframes. In another example, the uplink and downlink changeable subframe may be indicated in a predefined or preconfigured manner, that is, indicating subframe(s) predefined or preconfigured in the first uplink and downlink subframe configuration to be uplink and downlink changeable subframe(s), wherein, manners of predefining and preconfiguring are similar to those in Embodiment 1, and shall not be described herein any further.

In this embodiment, an entity of the network side may be a base station (BS), and may also be another transmission point (TP) having a control function, and this embodiment is not limited thereto.

In an implementation of this embodiment, in addition to indicating the uplink and downlink changeable subframe via the above indication information, the network side may also transmit uplink and downlink subframe change information to the UE to indicate the UE to change uplink and downlink setting(s) of one subframe or one group of subframes in first uplink and downlink subframe configuration at the network side via the uplink and downlink subframe change information.

In this implementation, the uplink and downlink subframe change information is identical to that in in Embodiment 1, and shall not be described herein any further.

With the method of this embodiment, the UE may determine the subframe or group of subframes of which the uplink and downlink configuration may be changed (uplink and downlink changeable subframe) after receiving the indication information. If the above uplink and downlink subframe change information is further received, it may further determine uplink and downlink setting(s) of which subframe or group of subframes needs to be changed according to the uplink and downlink subframe change information. And if the above uplink and downlink subframe change information is not received, it may determine whether to change the uplink and downlink setting of the uplink and downlink changeable subframe and how to change according to a predetermined policy, which shall be described later. Hence, as described above, as uplink and downlink transmission of different UEs may be scheduled at the same subframe by the same TP or different TPs, the system capacity is improved.

### Embodiment 3

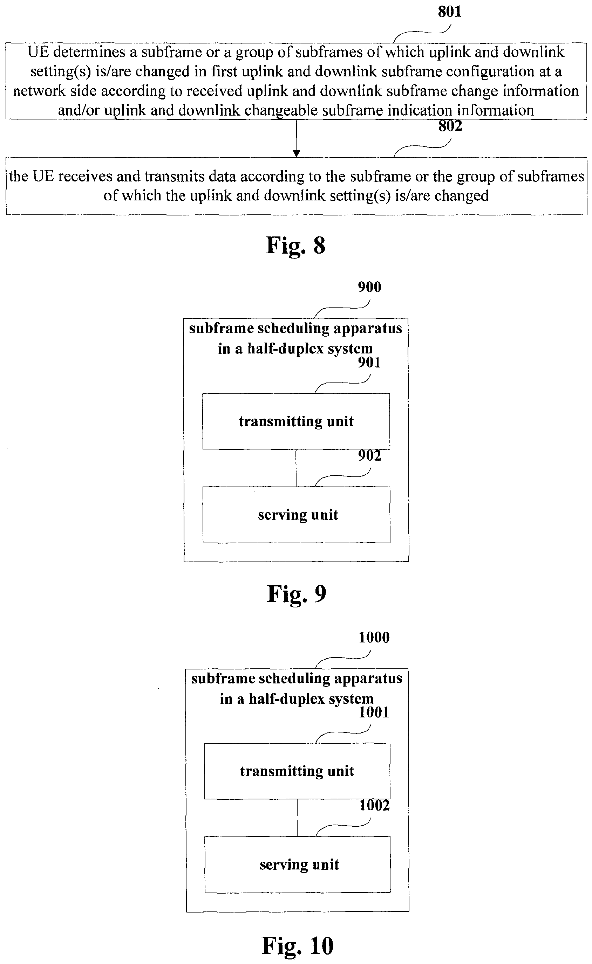

An embodiment of this disclosure further provides a data receiving and transmitting method in a half-duplex system, which is processing at a UE side corresponding to the methods of Embodiments 1 and 2. FIG. 8 is a flowchart of the method. Referring to FIG. 8, the method includes:
step 801: UE determines a subframe or a group of subframes of which uplink and downlink setting(s) is/are changed in first uplink and downlink subframe configuration at a network side according to received uplink and downlink subframe change information and/or uplink and downlink changeable subframe indication information; and
step 802: the UE receives and transmits data according to the subframe or the group of subframes of which the uplink and downlink setting(s) is/are changed.

In this embodiment, as described above, the network side may possibly transmit the uplink and downlink subframe change information and/or the uplink and downlink changeable subframe indication information, and in step 801, the UE may determine the subframe or the group of subframes of which uplink and downlink setting(s) is/are changed according to the received information, wherein, the uplink and downlink subframe change information and the uplink and downlink changeable subframe indication information have been described in detail in Embodiment 1 and Embodiment 2, respectively, the contents of which being incorporated herein, and being not going to be described herein any further.

In an implementation of this embodiment, if the UE receives the uplink and downlink subframe change information and the uplink and downlink subframe change information includes location information of a subframe of which uplink and downlink setting is changed, the UE may determine the subframe or the group of subframes of which the uplink and downlink setting(s) is/are changed in the first uplink and downlink subframe configuration at the network side according to the location information.

In another implementation of this embodiment, if the UE receives the uplink and downlink subframe change information and the uplink and downlink subframe change information does not include location information of a subframe of which uplink and downlink setting is changed, as described above, it shows that there exists a fixed time sequence relationship between the subframe of which the uplink and downlink setting is changed and a subframe receiving the uplink and downlink subframe change information, and the UE may determine the subframe or the group of subframes of which uplink and downlink setting(s) is/are changed in the first uplink and downlink subframe configuration at the network side according to the fixed time sequence relationship.

In a further implementation of this embodiment, if the UE receives the uplink and downlink changeable subframe indication information but does not receive the uplink and downlink subframe change information, the UE may determine that the uplink and downlink changeable subframe is of default uplink and downlink setting, such as being in consistence with the first uplink and downlink configuration at the network side, that is, being kept constant, or being all uplink subframes, or being all downlink subframes.

In a yet implementation of this embodiment, if the UE receives the uplink and downlink subframe change information and the uplink and downlink changeable subframe indication information, the UE may determine uplink and downlink setting of a subframe designated by the uplink and downlink subframe change information in the uplink and downlink changeable subframes is to be changed. In this implementation, if there exists a subframe that is not designated by the uplink and downlink subframe change information in the uplink and downlink changeable subframes, the UE may determine that the subframe which is not designated is of default uplink and downlink setting, such as being in consistent with the first uplink and downlink subframe configuration at the network side, or being all uplink subframes, or being all downlink subframes.

Taking the uplink and downlink subframe configuration (a) shown in FIG. 5 as an example, if the uplink and downlink changeable subframes indicated by the uplink and downlink changeable subframe indication information are an 8th to a 10th subframes (that is, in the uplink and downlink subframe configuration (a), uplink and downlink settings of the 8th to the 10th subframes may be changed), and a subframe of which uplink and downlink setting is changed indicated by the uplink and downlink subframe change information is the 8th subframe, in the uplink and downlink subframe configuration (a), the 8th subframe is changed from uplink into downlink, and the rest 9th to the 10th subframes may keep their original configuration, that is, they are all downlink subframes, and may also be all uplink subframes or all downlink subframes.

With the method of this embodiment, uplink and downlink setting of a subframe is changed according to the information transmitted by the network side, and as described above, the system capacity may be improved.

### Embodiment 4

An embodiment of this disclosure provides a subframe scheduling apparatus in a half-duplex system, applicable to an entity at a network side, such as a base station, or another transmission point having a control function, etc. As principles of the apparatus are similar to that of the method of Embodiment 1, the implementation of the method of Embodiment 1 may be referred to for implementation of the apparatus, with identical contents being not going to be described herein any further.

FIG. 9 is a schematic diagram of a structure of the apparatus. Referring to FIG. 9, the apparatus 900 includes:
a transmitting unit 901 configured to transmit uplink and downlink subframe change information to UE, the uplink and downlink subframe change information indicating the UE to change uplink and downlink setting(s) of one subframe or one group of subframes in first uplink and downlink subframe configuration at the network side; and
a serving unit 902 configured to serve for the UE at a corresponding subframe according to the changed uplink and downlink setting.

In an implementation, the uplink and downlink subframe change information includes location information of a subframe of which the uplink and downlink setting is changed. In this implementation, the location information may be indicated via a subframe serial number, and may also be indicated via a bitmap.

In another implementation, there exists a fixed time sequence relationship between a subframe of which the uplink and downlink setting is changed and a subframe receiving the uplink and downlink subframe change information.

Alternatively, the uplink and downlink subframe change information may further include scheduling information related to a subframe of which the uplink and downlink setting is changed.

With the apparatus of this embodiment, as described above, the system capacity may be improved.

### Embodiment 5

An embodiment of this disclosure provides a subframe scheduling apparatus in a half-duplexing system, applicable to an entity at a network side, such as a base station, or another transmission point having a control function, etc. As principles of the apparatus are similar to that of the method of Embodiment 2, the implementation of the method of Embodiment 2 may be referred to for implementation of the apparatus, with identical contents being not going to be described herein any further.

FIG. 10 is a schematic diagram of a structure of the apparatus. Referring to FIG. 10, the apparatus 1000 includes:
a transmitting unit 1001 configured to transmit uplink and downlink changeable subframe indication information to UE, the uplink and downlink changeable subframe indication information indicating a subframe or a group of subframes of which uplink and downlink setting(s) can be changed in first uplink and downlink subframe configuration at the network side; and
a serving unit 1002 configured to serve for the UE at a corresponding subframe according to the changed uplink and downlink setting.

In this embodiment, the uplink and downlink changeable subframe may be indicated via a subframe serial number, or the uplink and downlink changeable subframe may be indicated via a bitmap, or the uplink and downlink changeable subframe may be indicated via uplink and downlink subframe configuration different from the first uplink and downlink subframe configuration at the network side, or the uplink and downlink changeable subframe may be indicated in a predefined or preconfigured manner.

In this embodiment, the transmitting unit 1001 may further transmit uplink and downlink subframe change information to the UE, the uplink and downlink subframe change information indicating the UE to change uplink and downlink setting(s) of one subframe or one group of subframes in the first uplink and downlink subframe configuration at the network side.

In an implementation, the uplink and downlink subframe change information includes location information of a subframe of which the uplink and downlink setting is changed. In this implementation, the location information may be indicated via a subframe serial number, and may also be indicated via a bitmap.

In another implementation, there exists a fixed time sequence relationship between a subframe of which the uplink and downlink setting is changed and a subframe receiving the uplink and downlink subframe change information.

Alternatively, the uplink and downlink subframe change information may further include scheduling information related to a subframe of which the uplink and downlink setting is changed.

With the apparatus of this embodiment, as described above, the system capacity may be improved.

### Embodiment 6

An embodiment of this disclosure provides a data receiving and transmitting apparatus in a half-duplex system, applicable to a UE side. As principles of the apparatus are similar to that of the method of Embodiment 3, the implementation of the method of Embodiment 3 may be referred to for implementation of the apparatus, with identical contents being not going to be described herein any further.

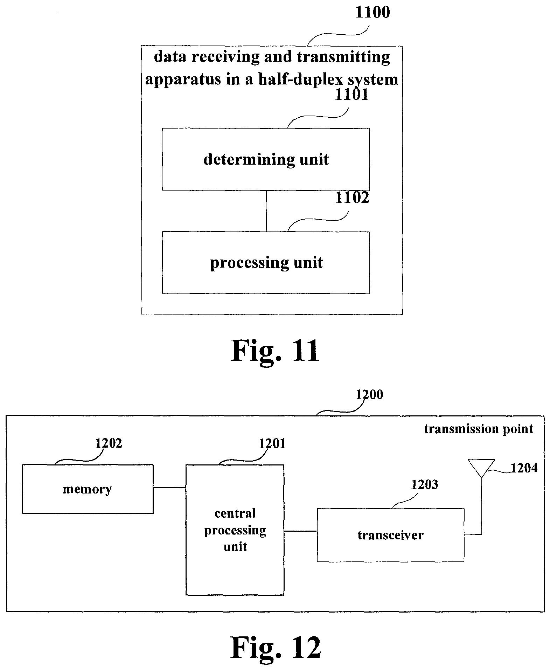

FIG. 11 is a schematic diagram of a structure of the apparatus. Referring to FIG. 11, the apparatus 1100 includes:
a determining unit 1101 configured to determine a subframe or a group of subframes of which uplink and downlink setting(s) is/are changed in first uplink and downlink subframe configuration at a network side according to received uplink and downlink subframe change information and/or uplink and downlink changeable subframe indication information; and
a processing unit 1102 configured to receive and transmit data according to the subframe or the group of subframes of which the uplink and downlink setting(s) is/are changed.

In an implementation, if the UE receives the uplink and downlink subframe change information and the uplink and downlink subframe change information includes location information of a subframe of which the uplink and downlink setting is changed, the determining unit 1101 determines the subframe or the group of subframes of which uplink and downlink setting(s) is/are changed in the first uplink and downlink subframe configuration at the network side according to the location information.

In another implementation, if the UE receives the uplink and downlink subframe change information and the uplink and downlink subframe change information does not include location information of a subframe of which the uplink and downlink setting is changed, the determining unit 1101 determines the subframe or the group of subframes of which uplink and downlink setting(s) is/are changed in the first uplink and downlink subframe configuration at the network side according to a fixed time sequence relationship between a subframe of which the uplink and downlink setting is changed and a subframe receiving the uplink and downlink subframe change information.

In a further implementation, if the UE receives the uplink and downlink changeable subframe indication information, the determining unit 1101 determines that the uplink and downlink changeable subframe is of default uplink and downlink setting. In this implementation, the default uplink and downlink setting is being in consistence with the first uplink and downlink configuration at the network side, or being all uplink subframes, or being all downlink subframes.

In a yet implementation, if the UE receives the uplink and downlink subframe change information and the uplink and downlink changeable subframe indication information, the determining unit 1101 determines uplink and downlink setting of a subframe designated by the uplink and downlink subframe change information in the uplink and downlink changeable subframes is to be changed. In this implementation, if there exists a subframe that is not designated by the uplink and downlink subframe change information in the uplink and downlink changeable subframes, the determining unit 1101 determines that the subframe which is not designated is of default uplink and downlink setting. In this implementation, the default uplink and downlink setting is being in consistent with the first uplink and downlink subframe configuration at the network side, or being all uplink subframes, or being all downlink subframes.

With the apparatus of this embodiment, as described above, the system capacity may be improved.

### Embodiment 7

An embodiment of this disclosure provides a transmission point, including the subframe scheduling apparatus as described in Embodiment 4 or Embodiment 5.

FIG. 12 is a schematic diagram of a structure of the transmission point of the embodiment of the present disclosure. As shown in FIG. 12, the transmission point 1200 may include a central processing unit (CPU) 1201 and a memory 1202, the memory 1202 being coupled to the central processing unit 1201. In this embodiment, the memory 1202 may store various data, and furthermore, it may store a program for information processing, and execute the program under control of the central processing unit 1201, so as to receive various information transmitted by UE, and transmit various information to the UE.

In an implementation, the functions of the subframe scheduling apparatus described in Embodiment 4 may be integrated into the central processing unit 1201. In this implementation, the central processing unit 1201 may be configured to: transmit uplink and downlink subframe change information to UE, the uplink and downlink subframe change information indicating the UE to change uplink and downlink setting(s) of one subframe or one group of subframes in first uplink and downlink subframe configuration at a network side; and serve for the UE at a corresponding subframe according to the changed uplink and downlink setting.

Alternatively, the uplink and downlink subframe change information includes location information of a subframe of which the uplink and downlink setting is changed. In this implementation, the location information may be indicated via a subframe serial number, and may also be indicated via a bitmap.

Alternatively, there exists a fixed time sequence relationship between a subframe of which the uplink and downlink setting is changed and a subframe receiving the uplink and downlink subframe change information.

Alternatively, the uplink and downlink subframe change information may further include scheduling information related to a subframe of which the uplink and downlink setting is changed.

In an implementation, the functions of the subframe scheduling apparatus described in Embodiment 5 may be integrated into the central processing unit 1201. in this implementation, the central processing unit 1201 may be configured to: transmit uplink and downlink changeable subframe indication information to UE, the uplink and downlink changeable subframe indication information indicating a subframe or a group of subframes of which uplink and downlink setting(s) can be changed in first uplink and downlink subframe configuration at a network side; and serve for the UE at a corresponding subframe according to the changed uplink and downlink setting.

Alternatively, the uplink and downlink changeable subframe may be indicated via a subframe serial number, or the uplink and downlink changeable subframe may be indicated via a bitmap, or the uplink and downlink changeable subframe may be indicated via uplink and downlink subframe configuration different from the first uplink and downlink subframe configuration at the network side, or the uplink and downlink changeable subframe may be indicated in a predefined or preconfigured manner.

Alternatively, the central processing unit 1201 may further be configured to: transmit uplink and downlink subframe change information to the UE, the uplink and downlink subframe change information indicating the UE to change uplink and downlink setting(s) of one subframe or one group of subframes in the first uplink and downlink subframe configuration at the network side.

Alternatively, the uplink and downlink subframe change information includes location information of a subframe of which the uplink and downlink setting is changed. In this implementation, the location information may be indicated via a subframe serial number, and may also be indicated via a bitmap.

Alternatively, there exists a fixed time sequence relationship between a subframe of which the uplink and downlink setting is changed and a subframe receiving the uplink and downlink subframe change information.

Alternatively, the uplink and downlink subframe change information may further include scheduling information related to a subframe of which the uplink and downlink setting is changed.

In another implementation, the subframe scheduling apparatus described in Embodiment 4 or Embodiment 5 and the central processing unit 1201 may be configured separately. For example, the subframe scheduling apparatus may be configured as a chip connected to the central processing unit 1201, with its functions being realized under control of the central processing unit 1201.

Furthermore, as shown in FIG. 12, the transmission point 1200 may further include a transceiver 1203, and an antenna 1204, etc. In this embodiment, functions of the above components are similar to those in the prior art, and shall not be described herein any further. It should be noted that the transmission point 1200 does not necessarily include all the parts shown in FIG. 12, and furthermore, the transmission point 1200 may include parts not shown in FIG. 12, and the prior art may be referred to.

In this embodiment, the transmission point may be a base station.

With the transmission point of this embodiment, as described above, the system capacity may be improved.

### Embodiment 8

An embodiment of this disclosure provides UE, including the data receiving and transmitting apparatus as described in Embodiment 6.

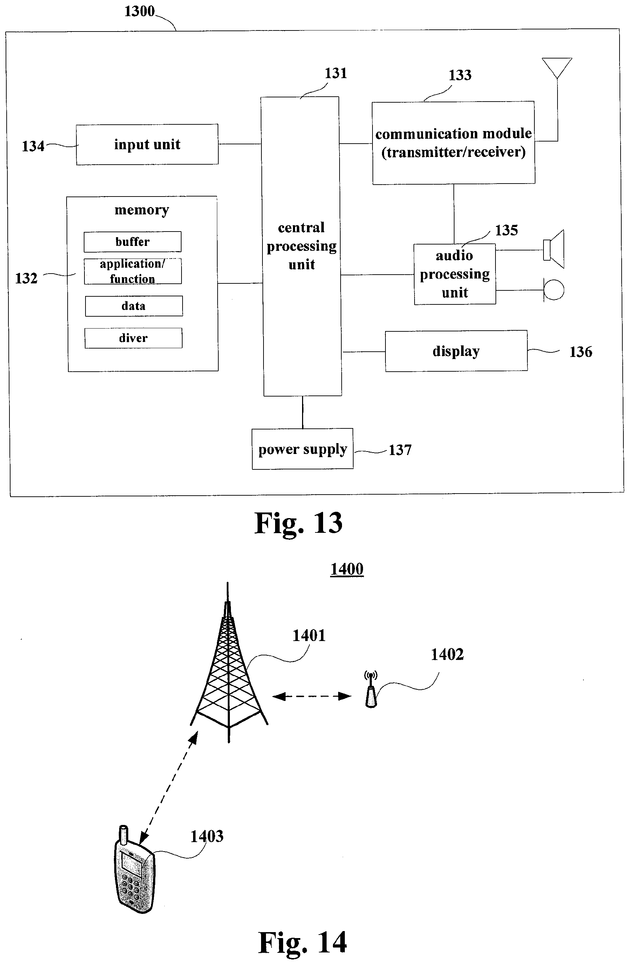

FIG. 13 is a block diagram of a systematic structure of the UE 1300 of the embodiment of this disclosure. As shown in FIG. 13, the UE 1300 may include a central processing unit 131 and a memory 132, the memory 132 being coupled to the central processing unit 131. It should be noted that this figure is illustrative only, and other types of structures may also be used, so as to supplement or replace this structure and achieve a telecommunications function or other functions.

In an implementation, the functions of the data receiving and transmitting apparatus may be integrated into the central processing unit 131. In this implementation, the central processing unit 131 may be configured to: determine a subframe or a group of subframes of which uplink and downlink setting(s) is/are changed in first uplink and downlink subframe configuration at a network side according to received uplink and downlink subframe change information and/or uplink and downlink changeable subframe indication information, and receive and transmit data according to the subframe or the group of subframes of which the uplink and downlink setting(s) is/are changed.

Alternatively, if the UE receives the uplink and downlink subframe change information and the uplink and downlink subframe change information includes location information of a subframe of which the uplink and downlink setting is changed, the determining unit determines the subframe or the group of subframes of which the uplink and downlink setting(s) is/are changed in the first uplink and downlink subframe configuration at the network side according to the location information.

Alternatively, if the UE receives the uplink and downlink subframe change information and the uplink and downlink subframe change information does not include location information of a subframe of which the uplink and downlink setting is changed, the determining unit determines the subframe or the group of subframes of which uplink and downlink setting(s) is/are changed in the first uplink and downlink subframe configuration at the network side according to a fixed time sequence relationship between a subframe of which the uplink and downlink setting is changed and a subframe receiving the uplink and downlink subframe change information.

Alternatively, if the UE receives the uplink and downlink changeable subframe indication information, the determining unit determines that the uplink and downlink changeable subframe is of default uplink and downlink setting. In this implementation, the default uplink and downlink setting is being in consistence with the first uplink and downlink configuration at the network side, or being all uplink subframes, or being all downlink subframes.

Alternatively, if the UE receives the uplink and downlink subframe change information and the uplink and downlink changeable subframe indication information, the determining unit determines uplink and downlink setting of a subframe designated by the uplink and downlink subframe change information in the uplink and downlink changeable subframes is to be changed. If there exists a subframe that is not designated by the uplink and downlink subframe change information in the uplink and downlink changeable subframes, the determining unit determines that the subframe which is not designated is of default uplink and downlink setting. In this implementation, the default uplink and downlink setting is being in consistent with the first uplink and downlink subframe configuration at the network side, or being all uplink subframes, or being all downlink subframes.

In another implementation, the data receiving and transmitting apparatus and the central processing unit 131 may be configured separately. For example, the data receiving and transmitting apparatus may be configured as a chip connected to the central processing unit 131, with its functions being realized under control of the central processing unit 131.

As shown in FIG. 13, the UE 1300 may further include a communication module 133, an input unit 134, an audio processing unit 135, a display 136 and a power supply 137. It should be noted that the UE 1300 does not necessarily include all the parts shown in FIG. 13, and furthermore, the UE 1300 may include parts not shown in FIG. 13, and the prior art may be referred to.

As shown in FIG. 13, the central processing unit 131 is sometimes referred to as a controller or control, and may include a microprocessor or other processor devices and/or logic devices. The central processing unit 131 receives input and controls operations of every components of the UE 1300.

In this embodiment, the memory 132 may be, for example, one or more of a buffer memory, a flash memory, a hard drive, a mobile medium, a volatile memory, a nonvolatile memory, or other suitable devices, which may store predefined or preconfigured information, and may further store a program executing related information. And the central processing unit 131 may execute the program stored in the memory 132, so as to realize information storage or processing, etc. Functions of other parts are similar to those of the prior art, which shall not be described herein any further. The parts of the UE 1300 may be realized by specific hardware, firmware, software, or any combination thereof, without departing from the scope of the present disclosure.

With the UE of this embodiment, as described above, the system capacity may be improved.

### Embodiment 9

An embodiment of this disclosure provides a communication system, including the transmission point as described in Embodiment 7, such as a base station, and the UE as described in Embodiment 8.

FIG. 14 is a schematic diagram of a structure of the communication system of the embodiment of this disclosure. As shown in FIG. 14, the communication system 1400 includes a first transmission point 1401, a second transmission point 1402, and UE 1403.

In this embodiment, the first transmission point 1401 and the second transmission point 1402 may be the transmission point 1200 as described in Embodiment 7, and the UE 1403 may be the UE as described in Embodiment 8, the contents of which being incorporated herein, and being not going to be described herein any further.

With the communication system of this embodiment, as described above, the system capacity may be improved.

An embodiment of the present disclosure provides a computer readable program code, which, when executed in a transmission point, will cause a computer unit to carry out the subframe scheduling method as described in Embodiment 1 or Embodiment 2 in the transmission point.

An embodiment of the present disclosure provides a computer readable medium, including a computer readable program code, which will cause a computer unit to carry out the subframe scheduling method as described in Embodiment 1 or Embodiment 2 in a transmission point.

An embodiment of the present disclosure provides a computer readable program code, which, when executed in UE, will cause a computer unit to carry out the data receiving and transmitting method as described in Embodiment 3 in the UE.

An embodiment of the present disclosure provides a computer readable medium, including a computer readable program code, which will cause a computer unit to carry out the data receiving and transmitting method as described in Embodiment 3 in UE.

The above apparatuses and methods of the present disclosure may be implemented by hardware, or by hardware in combination with software. The present disclosure relates to such a computer-readable program that when the program is executed by a logic device, the logic device is enabled to carry out the apparatus or components as described above, or to carry out the methods or steps as described above. The present disclosure also relates to a storage medium for storing the above program, such as a hard disk, a floppy disk, a CD, a DVD, and a flash memory, etc.

The present disclosure is described above with reference to particular embodiments. However, it should be understood by those skilled in the art that such a description is illustrative only, and not intended to limit the protection scope of the present disclosure. Various variants and modifications may be made by those skilled in the art according to the spirits and principle of the present disclosure, and such variants and modifications fall within the scope of the present disclosure.

## Claims

1. A subframe scheduling apparatus in a half-duplex system, applicable to a network side, the apparatus comprising:
a transmitting unit configured to transmit uplink and downlink subframe change information to UE, the uplink and downlink subframe change information indicating the UE to change uplink and downlink setting(s) of one subframe or one group of subframes in first uplink and downlink subframe configuration at the network side; and
a serving unit configured to serve for the UE at a corresponding subframe according to the changed uplink and downlink setting.

2. The apparatus according to claim 1, wherein the uplink and downlink subframe change information includes location information of a subframe of which the uplink and downlink setting is changed.

3. The apparatus according to claim 1, wherein,
the location information is indicated via a subframe serial number; or
the location information is indicated via a bitmap.

4. The apparatus according to claim 1, wherein there exists a fixed time sequence relationship between a subframe of which the uplink and downlink setting is changed and a subframe receiving the uplink and downlink subframe change information.

5. The apparatus according to claim 1, wherein the uplink and downlink subframe change information includes scheduling information related to a subframe of which the uplink and downlink setting is changed.

6. A subframe scheduling apparatus in a half-duplex system, applicable to a network side, the apparatus comprising:
a transmitting unit configured to transmit uplink and downlink changeable subframe indication information to UE, the uplink and downlink changeable subframe indication information indicating a subframe or a group of subframes of which uplink and downlink setting(s) can be changed in first uplink and downlink subframe configuration at the network side; and
a serving unit configured to serve for the UE at a corresponding subframe according to the changed uplink and downlink setting.

7. The apparatus according to claim 6, wherein,
the uplink and downlink changeable subframe is indicated via a subframe serial number; or
the uplink and downlink changeable subframe is indicated via a bitmap; or
the uplink and downlink changeable subframe is indicated via uplink and downlink subframe configuration different from the first uplink and downlink subframe configuration at the network side; or
the uplink and downlink changeable subframe is indicated in a predefined or preconfigured manner.

8. The apparatus according to claim 6, wherein the transmitting unit further transmits uplink and downlink subframe change information to the UE, the uplink and downlink subframe change information indicating the UE to change uplink and downlink setting(s) of one subframe or one group of subframes in the first uplink and downlink subframe configuration at the network side.

9. The apparatus according to claim 8, wherein the uplink and downlink subframe change information includes location information of a subframe of which the uplink and downlink setting is changed.

10. The apparatus according to claim 9, wherein,
the location information is indicated via a subframe serial number; or
the location information is indicated via a bitmap.

11. The apparatus according to claim 8, wherein there exists a fixed time sequence relationship between a subframe of which the uplink and downlink setting is changed and a subframe receiving the uplink and downlink subframe change information.

12. The apparatus according to claim 8, wherein the uplink and downlink subframe change information includes scheduling information related to a subframe of which the uplink and downlink setting is changed.

13. A data receiving and transmitting apparatus in a half-duplex system, applicable to a UE side, the apparatus comprising:
a determining unit configured to determine a subframe or a group of subframes of which uplink and downlink setting(s) is/are changed in first uplink and downlink subframe configuration at a network side according to received uplink and downlink subframe change information and/or uplink and downlink changeable subframe indication information; and
a processing unit configured to receive and transmit data according to the subframe or the group of subframes of which the uplink and downlink setting(s) is/are changed.

14. The apparatus according to claim 13, wherein if the UE receives the uplink and downlink subframe change information and the uplink and downlink subframe change information includes location information of a subframe of which the uplink and downlink setting is changed, the determining unit determines the subframe or the group of subframes of which the uplink and downlink setting(s) is/are changed in the first uplink and downlink subframe configuration at the network side according to the location information.

15. The apparatus according to claim 13, wherein if the UE receives the uplink and downlink subframe change information and the uplink and downlink subframe change information does not include location information of a subframe of which the uplink and downlink setting is changed, the determining unit determines the subframe or the group of subframes of which uplink and downlink setting(s) is/are changed in the first uplink and downlink subframe configuration at the network side according to a fixed time sequence relationship between a subframe of which the uplink and downlink setting is changed and a subframe receiving the uplink and downlink subframe change information.

16. The apparatus according to claim 13, wherein if the UE receives the uplink and downlink changeable subframe indication information, the determining unit determines that the uplink and downlink changeable subframe is of default uplink and downlink setting.

17. The apparatus according to claim 16, wherein the default uplink and downlink setting is being in consistent with the first uplink and downlink subframe configuration at the network side, or being all uplink subframes, or being all downlink subframes.

18. The apparatus according to claim 13, wherein if the UE receives the uplink and downlink subframe change information and the uplink and downlink changeable subframe indication information, the determining unit determines uplink and downlink setting of a subframe designated by the uplink and downlink subframe change information in the uplink and downlink changeable subframes is to be changed.

19. The apparatus according to claim 18, wherein if there exists a subframe that is not designated by the uplink and downlink subframe change information in the uplink and downlink changeable subframes, the determining unit determines that the subframe which is not designated is of default uplink and downlink setting.

20. The apparatus according to claim 19, wherein the default uplink and downlink setting is being in consistent with the first uplink and downlink subframe configuration at the network side, or being all uplink subframes, or being all downlink subframes.
